# EUROPÄISCHE PATENTANMELDUNG

(11) **EP 0 744 320 A1**
(43) Veröffentlichungstag der Anmeldung: **27.11.1996**
(21) Anmeldenummer: 96107553.8
(22) Anmeldetag: 11.05.1996
(51) Int. Cl.: B60R 1/12, G07C 1/30

(54) **Innenspiegel mit Informationseinrichtung**

(30) Priorität: 24.05.1995 DE 29508620 U
(71) Anmelder: Donnelly Hohe GmbH & Co. KG, 97903 Collenberg (DE)
(72) Erfinder: Fürst, Peter, 63927 Bürgstadt (DE)
(74) Vertreter: Zinngrebe, Horst, Dr.rer.nat.

(57) **Zusammenfassung**

Beschrieben wird ein Innenspiegel für ein Kraftfahrzeug mit einem ein Spiegelglas tragenden Gehäuse, an welchem eine Informationseinrichtung angeordnet ist, wobei die Informationseinrichtung eine am Spiegelglas befestigte Parkscheibe aufweist.

## Beschreibung

Die Erfindung betrifft einen Innenspiegel für ein Kraftfahrzeug mit einem ein Spiegelglas tragenden Gehäuse, in welchem eine Informationseinrichtung beherbergt ist.

In der deutschen Offenlegungsschrift 43 22 927 trägt der Innenspiegel eines Kraftfahrzeuges eine Informationseinrichtung mit Anzeigevorrichtung für den Fahrer, welche ihn über verschiedene Situationen unterrichtet, wie beispielsweise Stauwarnungen, Fahrzeugfunktionen, Außentemperatur und dergleichen.

Der Erfindung liegt die Aufgabe zugrunde, die Eigenschaft des Innenspiegels, Informationsträger sein zu können, weiter auszunutzen.

Dazu ist erfindungsgemäß vorgesehen, daß die Informationseinrichtung eine am Spiegelgehäuse befestigte Parkscheibe aufweist. Damit wird die Unbequemlichkeit beseitigt, daß für das Parken des Fahrzeuges auf Parkflächen die hierfür gegebenenfalls erforderliche Parkscheibe im Fahrzeug nicht gesondert aufbewahrt werden muß und daher im Bedarfsfall stets verwendungsbereit ist.

Zweckmäßig ist die Parkscheibe im Spiegelgehäuse drehbar gelagert, wobei das Gehäuse zweckmäßig einen Schlitz aufweisen kann, durch welchen die Parkscheibe manuell gedreht werden kann. Es empfiehlt sich, auf der der Windschutzscheibe zuweisenden Rückseite des Spiegelgehäuses einen Ausschnitt freizulassen, durch den die eingestellte Zeitangabe auf der Parkscheibe von außen durch die Windschutzscheibe deutlich sichtbar ist. Zur Kontrolle der eingestellten Uhrzeit ist zweckmäßig auch im vorderen Teil des Spiegelgehäuses bevorzugt in einem unteren Ansatz des Gehäuses, ein weiteres Sichtfenster für den Betätiger der Parkscheibe vorgesehen.

Nach einer besonders einfachen Ausführungsform der Erfindung kann die Parkscheibe außen auf die in Fahrtrichtung weisende Rückseite des Spiegelgehäuses mittels eines Dornes oder dergleichen drehbar aufgeklebt sein, so daß das Spiegelgehäuse die Parkscheibe für die Fahrzeuginsassen fast vollständig verdeckt aber dennoch von Hand betätigbar bleibt.

Im übrigen sind zweckmäßige Ausgestaltungen der Erfindung in den Unteransprüchen angegeben.

Die Erfindung wird nachstehend anhand des in der beigefügten Zeichnung dargestellten Ausführungsbeispiels im einzelnen beschrieben. Es zeigt:
- Fig. 1: die Ansicht der Rückseite eines schematisch dargestellten Kfz-Innenspiegels;
- Fig. 2: die Ansicht des Innenspiegels nach Fig. 1 von der Fahrerseite aus; und
- Fig. 3: eine weitere Erläuterung der Erfindung.

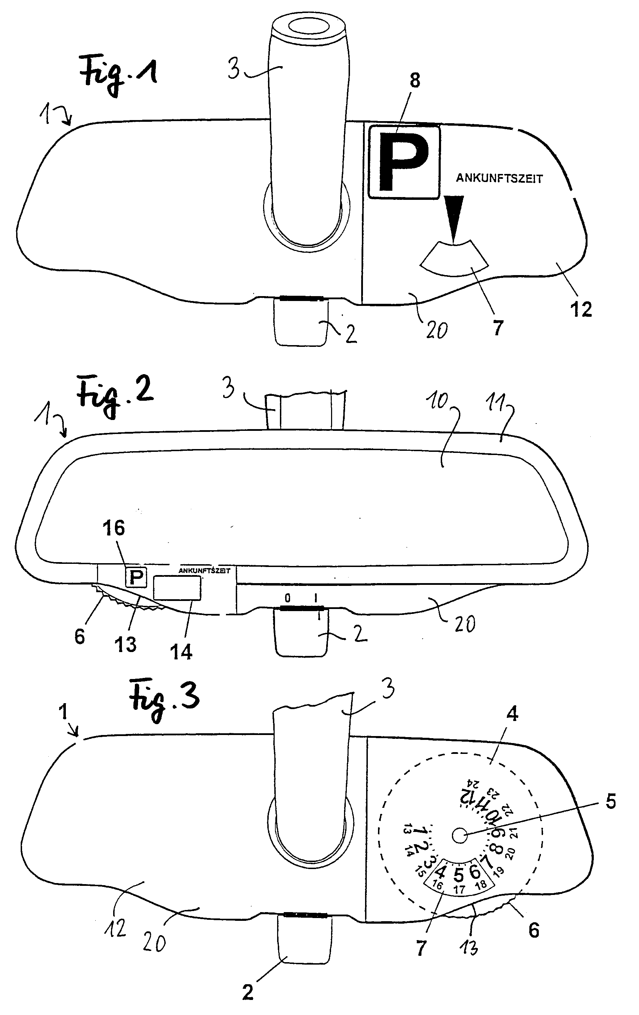

Der Innenspiegel weist ein Spiegelgehäuse 1 auf, welches auf einen Tragarm 3 von Hand relativ zu diesem verschwenkbar aufgeklemmt ist. Das Spiegelgehäuse 1 besitzt eine in Fahrtrichtung geschlossene Rückseite 12 und umschließt auf seiner Vorderseite mit einem Rand 11 ein Spiegelglas 10, welches durch Betätigen eines Bedienungsknopfes 2, der über einen an der Unterseite des Spiegelgehäuses 1 befestigten Ansatz 20 nach unten vorsteht, in üblicher Weise von einer Normalstellung in eine Abblendstellung gekippt werden kann.

In einem Abschnitt des Spiegelgehäuses, der bei Draufsicht auf das Spiegelglas 10 links vom Haltearm 3 und damit nahe zur Fahrerposition sich befindet, ist eine runde Parkscheibe 4 auf einem aus der Innenfläche des Spiegelgehäuses vorstehenden Lagerzapfen 5 um diesen drehbar gehalten, auf welcher in üblicher Weise die Tagesstunden angebende Zahlen in einem Kreis um den Lagerzapfen 5 auf der Vor- und Rückseite der Scheibe 4 aufgedruckt sind.

In die Rückseite 12 des Spiegelgehäuses 1 ist an dem erwähnten Abschnitt ein Sichtfenster 7 eingeschnitten, durch welches durch die Windschutzscheibe von außen ein Ausschnitt der die Tagesstunden bezeichnenden Zahlenreihe erkennbar ist. Ferner kann auf dem genannten Abschnitt der Spiegelgehäuserückseite 12 noch ein Parksymbol 8 aufgebracht sein.

Der untere Abschnitt 20 besitzt an seinem linksseitigem Übergang in den Rand 11 des Spiegelhäuses 1 einen Längsschlitz 13, durch welchen ein Teil der gerändelten Außenperipherie 6 der Parkscheibe 4 nach außen vorsteht, so daß an dem nach außen vorstehenden Abschnitt der gerändelten Peripherie 6 der Parkscheibe 4 durch manuelles Drehen hinter dem Sichtfenster 7 die Ankunftszeit des Fahrzeugs auf der Parkfläche eingestellt werden kann.
Zur Kontrolle der Einstellung befindet sich in dem Ansatz 20 neben dem Schlitz 13 ein vom Inneren des Fahrzeugs her sichtbares Fenster 14, durch welches die hinter dem Ausschnitt 7 eingestellte Ankunftszeit sichtbar ist. Es versteht sich, daß die Parkscheibe 4 dazu auf der Vorderseite und der Rückseite mit den die Tagesstunden bezeichnenden Zahlenreihen gegebenenfalls in umfangmäßiger Versetzung bedruckt ist. Neben dem Sichtfenster 14 kann wieder ein weiteres Parksymbol 16 auf den Ansatz 20 aufgebracht sein.

## Patentansprüche

1. Innenspiegel für ein Kraftfahrzeug mit einem ein Spiegelglas (10) tragenden Gehäuse (1), an welchem eine Informationseinrichtung angeordnet ist, dadurch gekennzeichnet, daß die Informationseinrichtung eine am Spiegelgehäuse (1) befestigte Parkscheibe (4) aufweist.

2. Innenspiegel nach Anspruch 1, dadurch gekennzeichnet, daß die Parkscheibe (4) innerhalb des Spiegelgehäuses (1) drehbar gelagert ist.

3. Spiegel nach Anspruch 2, dadurch gekennzeichnet, daß das Spiegelgehäuse (1) einen seitlichen Längsschlitz (13) aufweist, durch welchen ein Teil des Randes (6) der Parkscheibe (4) vorsteht.

4. Innenspiegel nach Anspruch 3, dadurch gekennzeichnet, daß der Längsschlitz (13) an einen am Spiegelgehäuse (1) vorgesehenen unteren Ansatz (20) ausgebildet ist.

5. Innenspiegel nach einem der vorstehenden Ansprüche, dadurch gekennzeichnet, daß die Rückseite (12) des Außengehäuses (1) ein Sichtfenster (7) aufweist, durch den ein Teil der Parkscheibe (4) erkennbar ist.

6. Innenspiegel nach einem der vorstehenden Ansprüche, dadurch gekennzeichnet, daß an der Vorderseite des Innenspiegelgehäuses (1) ein weiteres, vom Fahrzeuginneren her betrachtbares Sichtfenster (14) vorgesehen ist, durch welches ein weiterer Teil der Parkscheibe (4) erkennbar ist.

7. Innenspiegel nach Anspruch 1, dadurch gekennzeichnet, daß die Parkscheibe mit einem Dorn oder dergleichen von außen auf die Rückseite (12) drehbar aufgebracht ist.
